# EUROPEAN PATENT APPLICATION

(11) **EP 4 369 675 A1**
(43) Date of publication of application: **15.05.2024**
(21) Application number: 23208542.3
(22) Date of filing: 08.11.2023
(51) Int. Cl.: H04L 41/0631, H04L 41/16

(54) **METHOD FOR PROCESSING MISSING VALUE IN NETWORK LOG DATA AND CLASSIFYING ROOT CAUSE OF COMMUNICATION DEFECT THEREBY**

(30) Priority: 10.11.2022 KR 20220149179
(71) Applicant: Innowireless Co., Ltd., Gyeonggi-do 13590 (KR)
(72) Inventor: KWAK, Young Su, 16517 Gyeonggi-do (KR); Lee, So Jung, 16516 Gyeonggi-do (KR); Kwon, Myeong Mi, 16981 Gyeonggi-do (KR); KIM, Eun Kyu, 01775 Seoul (KR); Kwon, Oh Keol, 13611 Gyeonggi-do (KR)
(74) Representative: Mollekopf, Gerd Willi

(57) **Abstract**

The present disclosure relates to a method for processing missing values of network log data and a method for classifying communication defect root cause thereof by utilizing machine learning or deep learning techniques to analyze the root causes of various defects occurring in a network environment while obtaining a complete dataset by obtaining appropriate imputation values according to the characteristics of the parameters in which the missing values exist.

## Description

### [Technical Field]

The present disclosure relates to a method for processing missing values of network log data and a method for classifying communication defect root values thereof, and in particular, to a method for processing missing values of network log data and a method for classifying communication defect root cause thereof by utilizing machine learning or deep learning techniques to analyze the root causes of various defects occurring in a network environment while obtaining a complete dataset by obtaining appropriate imputation values according to the characteristics of the parameters in which the missing values exist.

### [Description of the Related Art]

Root Cause Analysis (RCA) provides network operators with the information they need to perform network optimization by determining the root cause of network communication defects. Traditional RCA techniques have many limitations because they measure various network parameters during a call, and rely on expert logic to determine the root cause of the defect based on the correlation between the measured values and various parameters.

Specifically, a traditional root cause determination method compares the measured parameter values of a defect call segment to thresholds in a human-set logic to determine the root cause of the defect. It first classifies defects into broad RCA categories, then divides each RCA category into reason groups, and then subdivides the measured data into corresponding root categories by comparing it to the thresholds in the logic. This traditional approach has the following limitations

First, due to various causes within the communication network, there are likely to be missing values in the parameter data representing the network environment and limitations in the logic because various cases are not fully considered.

In addition, both in the process of setting up logic and in the process of determining through logic, utilizing merely limited data will eventually lead to the matter of not being able to distinguish the root cause of the defect and determining it as "unknown," therefore, a strategy that compensates for the limitations of existing logic by considering various cases even if perfect data is not given is necessary.

In addition, human-defined logic may be limited to an expert's view of the network environment in which the defect occurred. In addition to the relationships and thresholds of the parameters specified as factors for each root cause in the existing logic, there may be other factors that may determine the root cause, or the thresholds may need to be adjusted. For example, a case whose root cause is determined to be "unknown" by the existing logic may be classified as the closest root cause with an appropriate threshold adjustment.

In addition, in order to classify specific root cause with the designed logic, network parameters may not be sometimes used in the form of measured values and it is needed to convert the data to ordinal or categorical form. In such cases, the data values may not recognize the interrelationships between parameters that may be detected as factors of a particular source when used as they are.

To compensate for this, techniques are being proposed that utilize machine learning or deep learning based on large amounts of measurement data to recognize correlations between various parameters to determine the root cause of defects.

There are also proposals to address the challenges of imperfect datasets collected in the field. For example, the presence of missing values in a dataset is often a major limitation, causing many difficulties in classifying the root cause of the defect.

Specifically, the network communication log data used for RCA contains missing values due to certain parameters not being measured for various technical or environmental reasons, and there are three main types of missing values. The most common type of missing value data is Missing at Random (MAR). This type of missing value data is when the proportion of missing value data in a dataset is correlated with the observed data in the dataset. That is, it is the case that the presence of missing value data for one particular parameter is correlated with other parameters in the dataset.

The opposite type of random missing is Missing Not at Random (MNAR). This type refers to cases where the missing values do not occur at random and the missing parameter values are related to the reason for missing. The final type, Missing Completely at Random (MCAR), is when the proportion of missing values that are autonomous from the total is not related to any other data. This is when a random parameter is missing randomly across the dataset, with a similar distribution of missing data regardless of the type and value of the parameter.

On the other hand, in order to apply machine learning or deep learning algorithms to RCA analysis, proper handling of missing data should be performed. In general, there are two main ways to handle missing values. That is to remove the incomplete parameter or sample where the missing value exists, or to impute the missing value with an appropriate value. In the case of MCAR, parameters or data samples with missing values may be deleted to obtain a complete dataset, but in the case of MAR or MNAR, imputation of the missing value is required.

In the case of MAR or NMAR, removing parameters or samples runs the risk of partially losing information in the data, which may lead to biased analysis results, so various methods have been developed to estimate missing values based on observation data within the dataset.

### [Disclosure of the Invention]

### [Technical Goals]

The present disclosure was created to solve the aforementioned matters, and aims to provide a method for processing the missing values of network log data and classifying the root causes of communication defects by utilizing machine learning or deep learning technology to analyze the root cause of various defects occurring in a network environment while obtaining a complete dataset by obtaining appropriate imputation values according to the characteristics of the parameters where the missing values exist.

### [Technical Solutions]

The invention is defined in claims 1, 11 and 12, respectively. Particular embodiments are set out in the dependent claims.

A method for processing missing values of network log data of the present disclosure to achieve the aforementioned matters include: operation (a) of separating network communication log data collected in a call interval into non-time series and time series data; operation (b) of imputing the missing values according to certain kinds of parameters in the non-time series data and time series data; operation (c) imputing the missing values via a Gaussian Mixture Model (GMM) for the non-time series data among the parameters other than the parameters processed in operation (b); and operation (d) imputing the missing values via a joint-approach for the time series data among the parameters other than the parameters processed in operation (b).

In the above configuration, the Serving Physical Cell ID (PCI) parameter creates a new parameter to represent it, with a value of 1 if data is present on the Serving PCI and 0 if data is missing.

For RF-related parameters, including Reference Signals Received Power (RSRP), Reference Signal Received Quality (RSRQ), and Signal to Interference plus Noise Ratio (SINR), exclude any data samples with missing values.

If a missing value in the Packet Data Convergence Protocol/Radio Link Control statistics summary parameter has the same meaning as zero, the missing value is imputed with zero.

Parameters other than those processed in operation (b) include one or more of: PCell Estimated Distance, KPI PCell PDSCH & PUSCH BLER[%], PHY R-BLER Info PDSCH Total Info DL R-BLER[%], and Total Info PHY R-BLER Info PUSCH UL R-BLER[%], Therein PCell is Primary Cell; KPI is Key Performance Indicator; PDSCH is Physical Downlink Shared Channel; PUSH is Physical Uplink Shared Channel; PHY is Physical Layer; BLER is Block Error Rate; R-BLER is Residual Block Error Rate; UL is Uplink; and DL is Downlink.

Operation (c) may include operation (c1) of dividing the non-series data into a dataset without missing value (D_{y}; non-missing value dataset) and a dataset with missing value (Dₙ; missing value dataset); operation (c2) of clustering the non-missing value dataset (D_{y}) through a GMM-based EM algorithm, finding the centroid of each cluster, and assigning each instance to the cluster with the closest Euclidean distance; operation (c3) of finding a cluster for each instance after clustering the missing value dataset (Dₙ) based on the clustering result of operation (c2); operation (c4) of finding a complete instance that is closest to the instance with missing values based on the Euclidean distance from each cluster found in operation (c3); and operation (c5) of imputing the missing values with the average value of the complete instance found in operation (c4).

Operation (d) imputes the missing value in a way that minimizes the loss of reconstructing the existing time series data with the missing value and the loss of randomly imputing the missing value by iteratively training to minimize the two losses.

The method includes operation (d1) of artificially masking a predetermined percentage of data at random from the existing time series data with missing value to generate virtual missing value; operation (d2) of calculating the alternative loss value between the missing value artificially generated by the Mean Absolute Error (MAE) and the imputation value after the imputation model imputes all the missing value; and operation (d3) of reconstructing the observed data present in the existing data through modeling processing and calculating the difference between the observed data and the reconstructed data by the MAE to obtain the loss value.

To recognize this artificially generated missing value, an Indicating Mask that denotes artificially masked values as 1 and all other values as 0 may be utilized.

As an imputation model, Low-Rank Autoregressive Tensor Completion (LATC) is applied, which is constructed based on an autoregressive model that may consider the overall data flow of time series data, and converts the multivariate time series data into a three-dimensional tensor form and applies it to the autoregressive model.

As described above, a Fully Connected Neural Network (FCNN) is trained by non-series data with imputed missing values to obtain a model with optimal parameters, which is then used to classify the root cause of the defect for the non-time series data.

As described above, a 1-Dimensional Convolutional Neural Network (1D-CNN) is trained by the time series data with imputed missing values to obtain a model with optimal parameters, which is then used to classify the root cause of the defect for the time series data.

### [Effects]

According to the method of present disclosure for processing missing values of network log data and classifying the root cause of communication defects, it is possible to compensate for the limitations by performing appropriate data preprocessing on network log data, and to determine various root causes of communication defects through a deep learning algorithm that has been trained on a large amount of data, thereby significantly reducing cases in which the root cause is not clearly determined in network log data determined to be defective due to a large proportion of missing values.

### [Brief Description of the Drawings]

- FIG. 1: is an overall flow diagram of the method of the present disclosure for processing missing values in network log data and classifying communication defect root causes thereby.
- FIG. 2: is a flow diagram to illustrate the process of imputing missing values for non-time series data in the method of the present disclosure.
- FIG. 3: is a sequence chart to illustrate the process of missing value imputation of time series data based on joint approach in the method of the present disclosure.
- FIG. 4: is a flow diagram to illustrate the process of non-time series data learning in the method of the present disclosure for processing missing values of network log data and classifying defect root cause thereby.
- FIG. 5: is a flow diagram to illustrate the process of time series data learning in the method of the present disclosure for processing missing values of network log data and classifying communication defect root cause thereby.

### [Detailed Description for Carrying Out the Invention]

Hereinafter, with reference to the accompanying drawings, preferred example embodiments of method of the present disclosure for processing missing values of network log data and classifying communication defect root cause thereby.

The present disclosure relates to a method for processing missing values of network log data and a method for classifying communication defect root cause thereof by utilizing machine learning or deep learning techniques to analyze the root causes of various defects occurring in a network environment while obtaining a complete dataset by obtaining appropriate imputation values according to the characteristics of the parameters in which the missing values exist.

The present disclosure aims to compensate for the matter of missing values in a dataset measuring a network environment by training a deep learning algorithm to identify multi-dimensional relationships between parameters and solve a root cause classification matter. To solve the matter of missing values, it is necessary to impute the missing values with appropriate values that fit the characteristics of the dataset or each parameter.

A deep learning algorithm may then be trained using supervised learning on this improved dataset, and a multi class classification model may be obtained to classify the root cause through the trained algorithm. When trained with a large amount of data and learning a wide variety of patterns, the model may recognize multi-dimensional relationships between multiple network parameters and determine the root cause of defects that are difficult to classify with logic in the related art.

The following is an overview of the terms used in the present disclosure.

Imputation: it means imputing missing values. In order to use data in machine learning training, missing values must be imputed with specific values. Depending on the reason that the missing value occurs or the proportion of missing value in dataset, the type of missingness may be determined and it is important to characterize these missing values to set an appropriate imputation value.

Gaussian mixture: A mixture of k Gaussian distributions. It may be used to analyze the characteristics of a dataset that may be classified into k clusters. Each Gaussian distribution is represented by a mean, which is the center of the cluster, a covariance, which is the width of the distribution, and a mixing probability, which is how large or small the Gaussian function is.

Gaussian Mixture Model (GMM): One of the machine learning algorithms that may classify data into different categories based on the probability distribution of the data. The optimal GMM parameters may be found through the iterative Expectation-Maximization (EM) algorithm, which consists of expectation and maximization.

Fully Connected Neural Network (FCNN): The layers that make up a neural network are "densely" connected. In other words, it's a neural network where the neurons in each layer are all connected.

1-Dimensional Convolutional Neural Network (1D-CNN): A neural network that extracts features from data through a convolutional layer in one dimension. It is well suited to extracting the characteristics of the data, when the type of data on which a neural network is training is one-dimensional time series data, such as sequences or natural language.

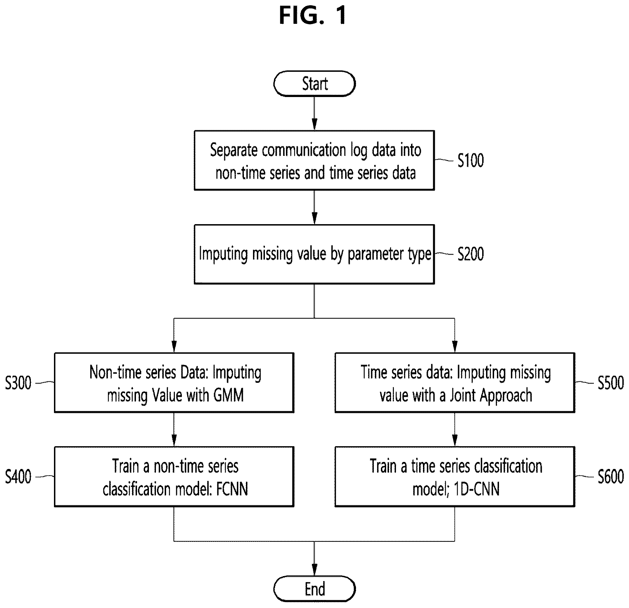

FIG. 1 is an overall flow diagram of the method of the present disclosure for processing missing values in network log data and classifying communication defect root causes thereby, showing the overall process of supplementing the dataset with preprocessing and training a supervised learning algorithm for root cause classification.

As shown in FIG. 1, according to the method for processing missing values of network log data and classifying communication defect root causes thereby of the present disclosure, in operation S100, the network log data of a call segment utilized for screening the root cause of a defect is divided into non-time series data and time series data.

For non-time series data, a single root cause is characterized by a function of a set of features, F = {feature1, feature2, ..., featureₙ}. For time series data, on the other hand, the features that determine a single root cause are a sequence, each with a length equal to the time interval. Examples of non-time series data and time series data are shown in Table 1 and Table 2 below, respectively.

**[Table 1]**

| Event Root Cause | KPI PCell RF Serving SS-RSRP [dBm] | KPI PCell RF Serving SS-SINR [dB] | ... | KPI PCell RF PUSCH Power [dBm] |
|---|---|---|---|---|
| [5G-NR]High Downlink Residual BLER | -90.7 | -1.94 | | 15.33 |
| [5G-NR]High PDSCH BLER | -90.7 | -1.94 | | 15,33 |
| [5G-NR]High PUSCH BLER | -90.7 | -1.94 | | 4.54 |
| [5G-NR]Interference | -90.7 | -3.73 | | 4.31 |
| [5G-NR]Poor SS-SINR | -90.7 | -3.73 | | 4.31 |
| [5G-NR]Poor SS-SINR | -104.73 | -6.41 | | 0 |
| [5G-NR]Poor SS-SINR | -91.11 | -5.13 | | 20.97 |
| [5G-NR]High Downlink Residual BLER | -110.93 | -10.98 | | 0 |
| [5G-NR]High PDSCH BLER | -110.93 | -10.98 | | 0 |

**[Table 2]**

| Timestamp | Event Root Cause | KPI PCell RF Serving SS-RSRP [dBm] | KPI PCell RF Serving SS-SINR [dB] | ... | RRC Source Cell Info Source PCI |
|---|---|---|---|---|---|
| 7:57:47 | [LTE]Sudden drop in signal strength | -85.17 | 25.52 | | 410 |
| 7:57:48 | [LTE]Sudden drop in signal strength | -89 | 3.34 | | 359 |
| 9:03:05 | [LTE]Sudden drop in signal strength | -71.52 | 27.6 | | 197 |
| 9:03:06 | [LTE]Sudden drop in signal strength | -7&.4 | 8.15 | | 37 |
| 5:03:49 | [LTE]Continuous Weak RSRP | -125.58 | -0.02 | | 55 |
| 5:03:50 | [LTE]Continuous Weak RSRP | -130.09 | 4.66 | | 55 |
| 5:03:51 | [LTE]Continuous Weak RSRP | -128.56 | -3.46 | | 55 |
| 5:03:52 | [LTE]Continuous Weak RSRP | -130.26 | 4.72 | | 55 |
| 5:03:53 | [LTE]Continuous Weak RSRP | -126.34 | 1.25 | | 9 |
| 5:03:54 | [LTE]Continuous Weak RSRP | -124.11 | 2.75 | | 9 |
| 5:03:55 | [LTE]Continuous Weak RSRP | -121.71 | 4.73 | | 9 |
| 5:03:56 | [LTE]Continuous Weak RSRP | -120.81 | 4.6 | | 9 |
| 5:03:57 | [LTE]Continuous Weak RSRP | -119.31 | 7.2 | | 9 |
| 5:03:58 | [LTE]Continuous Weak RSRP | -120.53 | 5.42 | | 9 |
| 5:03:59 | [LTE]Continuous Weak RSRP | -121.52 | 5.27 | | 9 |

Next, in operation S200, in both non-time series data and time series data the missing values are processed based on the appropriate rationale for each parameter.

For example, the Serving Physical Cell ID (PCI) parameter is merely meaningful if the value is present, rather than the value itself, so a new parameter is created to represent this parameter, with a value of 1 if the data is present on the Serving PCI and 0 if the data is missing.

RF-related parameters, such as Reference Signals Received Power (RSRP), Reference Signal Received Quality (RSRQ), or Signal to Interference plus Noise Ratio (SINR), which indicate the state of the communication environment, are sensitive parameters that represent the communication environment, so any data samples with missing values are excluded.

If a missing value has the same meaning as zero, such as the Packet Data Convergence Protocol/Radio Link Control (PDCP/RLC) statistics summary, the missing value is imputed with zero.

The parameters that do not meet the aforementioned parameter-specific conditions (for example, PCell Estimated Distance, KPI PCell PDSCH & PUSCH BLER[%], PHY R-BLER Info PDSCH Total Info DL R-BLER[%], Total Info PHY R-BLER Info PUSCH UL R-BLER[%]) are divided into non-time series data and time series data as shown in operation S300 and operation S500, and each alternative technique is applied.

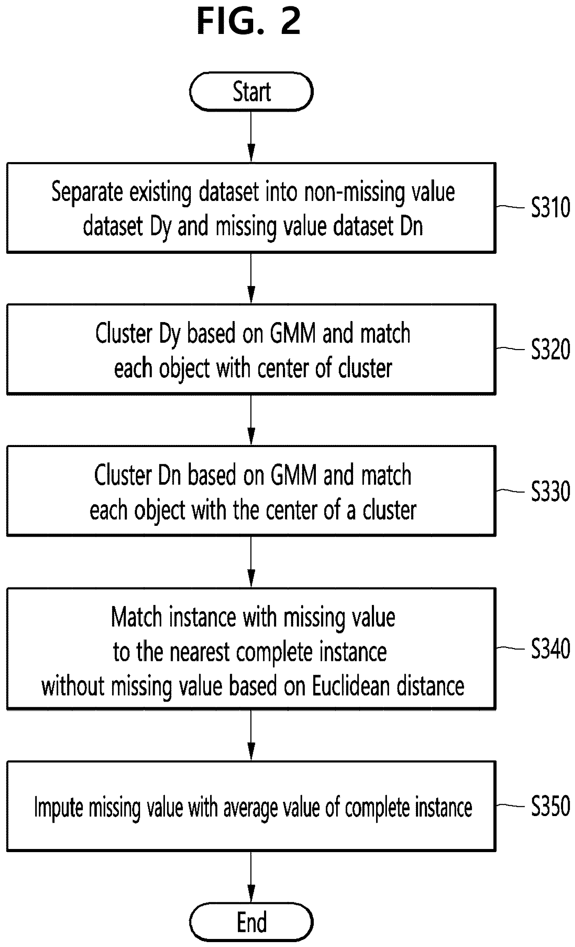

First, the non-time series data generates imputed values based on observation data within the dataset, for example, a Gaussian mixture model (GMM) is used to find imputation value for the missing values based on the clustering of the observation data. FIG. 2 is a flow diagram to illustrate the process of imputing missing values for non-time series data in the method of the present disclosure.

First, in operation S310, the dataset is divided into a dataset without missing values (D_{y}; non-missing value dataset) and a dataset with missing values (Dₙ; missing value dataset).

Next, in operation S320, the non-missing value dataset (D_{y}) is clustered using a GMM-based EM algorithm, and each instance is assigned to the cluster with the closest Euclidean distance by finding the center of each cluster.

Next, operation S330 finds the cluster of each instance after clustering the missing value dataset (Dₙ) based on the clustering result of operation S320.

Next, operation S340 finds the closest complete instance (observation instance without missing values) to the instances with missing values in each cluster based on Euclidean distance.

Finally, in operation S3 50, the missing values are imputed with the mean of the complete instances found in operation S340.

Referring back to FIG. 1, in operation S500, the time series data is imputed based on a joint-approach, whereby the missing values are imputed in such a way as to minimize two losses: the loss of "reconstructing" the existing data and the loss of randomly imputing the missing values through an iterative training process.

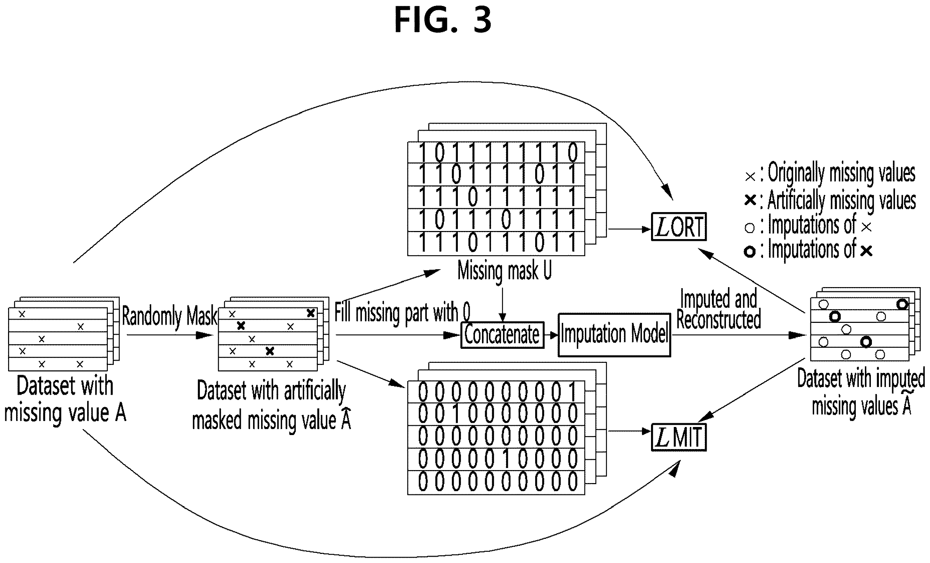

FIG. 3 is a sequence chart to illustrate the process of missing value imputation of time series data based on the joint approach in the present disclosure, which consists of two training methods.

First, virtual missing value may be created by artificially masking a predetermined percentage of the data, for example 20%, at random from the existing time series data where the missing value exists. In Figure 3, data that is present in the original data but is artificially masked as missing value is colored green. The imputation model imputes all the missing values, where the percentage loss of imputation between the artificially generated missing values and the imputation values is calculated by the mean absolute error (MAE) (process A). To recognize artificially masked values, an Indicating Mask is utilized, which denotes artificially masked values as 1 and all other values as 0.

Observation data present in the existing data are reconstructed through modeling processing. The loss value is obtained by calculating the difference between the original observation data and the reconstructed data by the MAE to (process B).

Processes A and B above have different roles. Process A directs the model to find the most appropriate value for the missing values, while Process B directs the model that finds the imputation values to converge on the distribution of the existing observation data. In Figure 3, the "imputation model", colored blue, may be a variety of models that impute missing values in a time series.

For example, Low-Rank Autoregressive Tensor Completion (LATC), which is based on an autoregressive model that may consider the overall data flow of time series data, may be applied, converting multivariate time series data into a three-dimensional tensor form and applying it to an autoregressive model.

Next, once a dataset that has been preprocessed through operation 5300 and operation S500, that is, has been corrected for missing values, operation S400 and operation S600 utilize deep learning algorithms to classify the root cause of the defect.

Specifically, deep learning algorithms suitable for each data type of non-time series dataset and time series dataset are trained, and the algorithm is trained and validated on the training and validation datasets during multiple epoch iterations by dividing each dataset into train, validation, and test. Through repeated training and validation, the hyperparameters of the neural network are tuned, and a model with optimal parameters is obtained.

The final model's root cause classification performance is checked with metrics such as accuracy, recall, and precision by classifying as test data. For each dataset, a suitable deep learning neural network is as below.

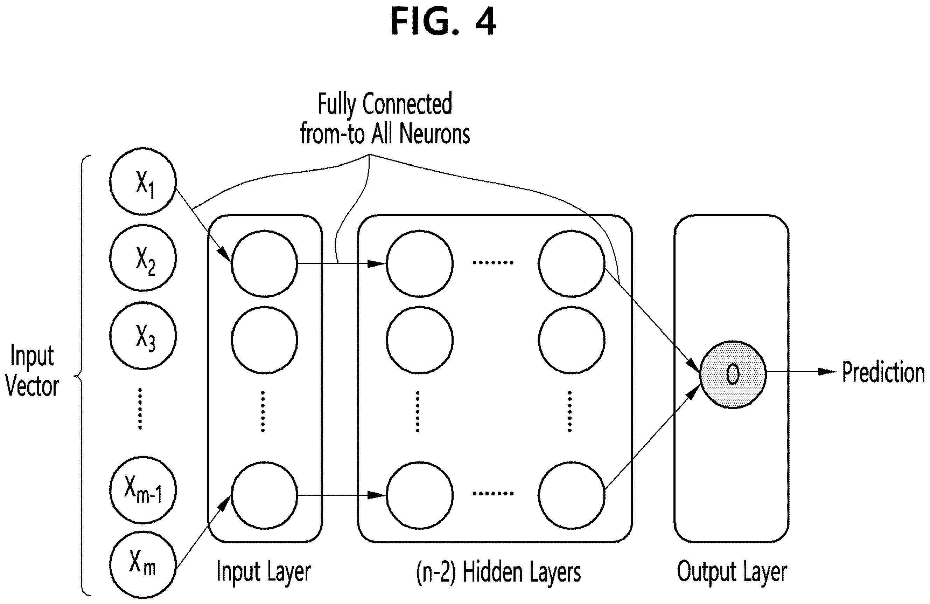

FIG. 4 is a flow diagram to illustrate the process of non-time series data learning in the method of the present disclosure for processing missing values of network log data and classifying defect root cause thereby. As shown in FIG. 4, a Fully Connected Neural Network (FCNN) is first trained with the non-time series data. FCNN is a type of Artificial Neural Network (ANN) in which multiple hidden layers, such as MultiLayer Perceptron (MLP), form a connection between the input and output of the neural network, and the neurons in each layer are all connected.

These dense neural networks are formed by adding dropout and batch normalization to the hidden layers to prevent overfitting. Each hidden layer sets the weights and bias to be assigned to the data coming from the input or previous layer, which is then scaled by the activation function before being passed to the output or next layer.

The final output finds the probability for each target class through a softmax function. Since this is multi class classification matter, the difference between the model's prediction and the target class (that is, the correct answer) is found using the CrossEntropyLoss function, and the Adam optimizer is trained to minimize the loss. The training is completed when the specified number of epochs is reached, or when the minimum loss is consistently found for the specified number of iterations.

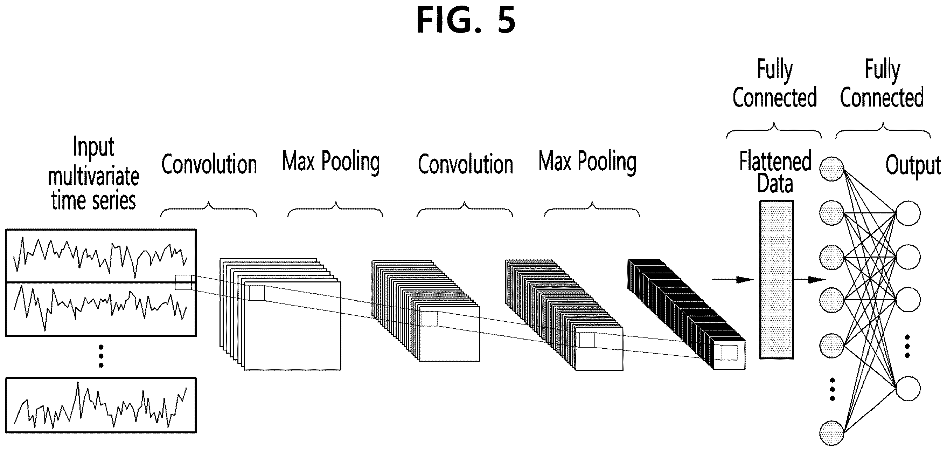

FIG. 5 is a flow diagram to illustrate the process of time series data learning in the method of the present disclosure for processing missing values of network log data and classifying communication defect root cause thereby. As shown in FIG. 5, a 1-Dimensional Convolutional Neural Network (1D-CNN) is trained with the time series data. The method for implementing 1D-CNN time series classification is implemented in two main stages: the first stage measures the differences between the time series to be classified or converts the data into feature vectors.

Next, the second stage performs the classification task. The algorithms that may be used here range from k-nearest neighbors or SVM (Support Vector Machine) algorithms, which are the main machine learning algorithms, to deep learning neural networks.

The overall structure of a 1D-CNN classification model is as follows.

It goes through a convolutional layer, which extracts patterns in the time series data as features, and a max pooling stage, which compresses the extracted features into a vector. The extracted and refined feature vectors are then fed into the fully connected layer where classification is performed. The fully connected layer ensures that the appropriate weights and biases are obtained, and the final softmax function provides the probabilities of the root cause classes to be classified as output. The "fully connected" part works the same as FCNN above. It is trained to minimize the difference between the model's prediction and the target using the CrossEntropyLoss function and Adam's optimization.

The above has described in detail the present disclosure's method of processing defect values of network log data and classifying communication defect root cause thereof, but the present disclosure is not limited to the above example embodiments and may be practiced in various variations to the extent permitted by the technical ideas of the present disclosure.

## Claims

1. A method for processing a missing value in network log data, the method comprising:
(a) separating network communication log data collected in a call interval into non-time series and time series data;
(b) imputing the missing values according to certain kinds of parameters in the non-time series data and time series data;
(c) imputing the missing values via a Gaussian Mixture Model (GMM) for the non-time series data among the parameters other than the parameters processed in imputing (b); and
(d) imputing the missing values via a joint-approach for the time series data among the parameters other than the parameters processed in imputing (b).

2. The method of claim 1, **characterized in that** the Serving Physical Cell ID (PCI) parameter creates a new parameter to represent it,
with a value of 1 if data is present on the Serving PCI and
0 if data is missing.

3. The method of claim 1 or 2, **characterized in that**, for RF-related parameters including Reference Signals Received Power (RSRP), Reference Signal Received Quality (RSRQ), and Signal to Interference plus Noise Ratio (SINR), data samples with missing values is excluded if they exist.

4. The method of claim 1, 2 or 3, **characterized in that**, if a missing value in the Packet Data Convergence Protocol/Radio Link Control statistics summary parameter has the same meaning as zero, the missing value is imputed with zero.

5. The method of any of the preceding claims, **characterized in that** parameters other than those processed in imputing (b) include PCell Estimated Distance, KPI PCell PDSCH & PUSCH BLER[%], PHY R-BLER Info PDSCH Total Info DL R-BLER[%], and Total Info PHY R-BLER Info PUSCH UL R-BLER[%]; with
PCell is Primary Cell;
KPI is Key Performance Indicator;
PDSCH is Physical Downlink Shared Channel;
PUSH is Physical Uplink Shared Channel;
PHY is Physical Layer;
BLER is Block Error Rate;
R-BLER is Residual Block Error Rate;
UL is Uplink; and
DL is Downlink.

6. The method of any of the preceding claims, **characterized in that**, imputing (c) comprises:
(c1) dividing the non-series data into a dataset without missing value (D_{y}; non-missing value dataset) and a dataset with missing value (Dₙ; missing value dataset);
(c2) clustering the non-missing value dataset (D_{y}) through a GMM-based Expectation Maximation (EM) algorithm, finding the centroid of each cluster, and assigning each instance to the cluster with the closest Euclidean distance;
(c3) finding a cluster for each instance after clustering the missing value dataset (Dₙ) based on the clustering result of clustering (c2);
(c4) finding a complete instance that is closest to the instance with missing values based on the Euclidean distance from each cluster found in finding (c3); and
(c5) imputing the missing values with the average value of the complete instance found in finding (c4).

7. The method of any of the preceding claims, **characterized in that** imputing (d) imputes the missing value in a way that minimizes the loss of reconstructing the existing time series data with the missing value and the loss of randomly imputing the missing value by iteratively training to minimize the two losses.

8. The method of claim 7, comprising:
(d1) artificially masking a predetermined percentage of data at random from the existing time series data with missing value to generate virtual missing value;
(d2) calculating the alternative loss value between the missing value artificially generated by the Mean Absolute Error (MAE) and the imputation value after the imputation model imputes all the missing value; and
(d3) reconstructing the observed data present in the existing data through modeling processing and calculating the difference between the observed data and the reconstructed data by the MAE to obtain the loss value.

9. The method of claim 8, **characterized in that**, in order to recognize the artificially generated missing value, an Indicating Mask that denotes artificially masked values as 1 and all other values as 0 is utilized.

10. The method of claim 8, **characterized in that**, as an imputation model, Low-Rank Autoregressive Tensor Completion (LATC) is applied, which is constructed based on an autoregressive model that may consider the overall data flow of time series data, and converts the multivariate time series data into a three-dimensional tensor form and applies it to the autoregressive model.

11. A method for classifying root cause of defect by processing missing value in network log data, **characterized in that** a Fully Connected Neural Network (FCNN) is trained by non-series data with imputed missing values by the method of claim 6 to obtain a model with optimal parameters, which is then used to classify the root cause of the defect for the non-time series data.

12. A method for classifying root cause of defect by processing missing value in network log data, **characterized in that** a 1-Dimensional Convolutional Neural Network (1D-CNN) is trained by the time series data with imputed missing values by the method of claim 7, 8 or 9 to obtain a model with optimal parameters, which is then used to classify the root cause of the defect for the time series data.
